# EUROPEAN PATENT SPECIFICATION

(11) **EP 0 724 805 B1**
(45) Date of publication and mention of the grant of the patent: **23.06.1999**
(21) Application number: 94931699.6
(22) Date of filing: 08.09.1994
(51) Int. Cl.: H04M 3/28

(54) **DETECTION SYSTEM FOR COMPONENT IDENTIFIERS IN A TELECOMMUNICATION SYSTEM**
DETEKTIONSSYSTEM FÜR BAUELEMENT-IDENTIFIZIERER IN EINEM TELEKOMMUNIKATIONSSYSTEM
SYSTEME DE DETECTION D'IDENTIFICATEURS DE COMPOSANTS D'UN SYSTEME DE TELECOMMUNICATIONS

(30) Priority: 10.09.1993 NL 9301571; 08.10.1993 NL 9301737
(43) Date of publication of application: 07.08.1996
(73) Proprietor: Koninklijke KPN N.V., 9726 AE Groningen (NL); VITRONIC HOLDING B.V., NL-4817 BL Breda (NL)
(72) Inventor: IJKELENSTAM, Evert, Pieter, NL-3434 AN Nieuwegein (NL); SHARMA, Arvind, NL-5628 TR Eindhoven (NL)
(74) Representative: Waxweiler, Jean
(86) International application number: NL9400220
(87) International publication number: WO9507588

(56) References cited:
- EP-A- 0 475 663
- DE-C- 3 512 787
- US-A- 3 891 811
- US-A- 3 973 090
- PATENT ABSTRACTS OF JAPAN vol. 5, no. 145 (E-74) (817) 12 September 1981 & JP,A,56 079 559 (HITACHI SEISAKUSHO K.K.) 30 June 1981

## Description

### A. BACKGROUND OF THE INVENTION

The invention relates to a system for detecting the identifier of a first component of a telecommunication network comprising a detector which is connected to that first component and said detector being equipped to transmit the identifier of the first component to a remitter being equipped to transmit to the detector the received identifier of the first component.

Telecommunication networks, for example telephony networks, comprise large numbers of cable cores, of which a large proportion is allocated to subscribers (subscriber connections). For all the cable cores (lines), it is necessary to record administratively how they have been allocated. In addition to new allocations, it is also necessary to register the lines which become free again, for example, by the discontinuation of allocations. In order to maximize the quality of the services provided, for example in making new connections, and to minimize the costs due to overcapacity, it is desirable to be able to compare the actual line occupation with the administrative information at certain times. According to current practice, a first operator connects a ('hand-held') telephone set to the network, for example at a test point in a cable distribution box, after which said operator rings a second operator who is connected to a telephone number which has been cleared for 'calling number display'. The second operator can consequently see the identifier of the line from which ringing is taking place and communicates the latter, via the same or another connection, to the first operator. The latter can then see whether the administrated identifier corresponds to the identifier detected in this way. In this way it may also be found that a line has become free which is still allocated 'on paper' to a subscriber connection or other component.

Since the operator at the test point in the network is not in a position to test directly how lines have been allocated, two operators are therefore always necessary to test for continuity in this way, as a result of which the efficiency is not very high, especially when testing large numbers of 'components' (lines) for continuity.

Such a remitter system is known per se from DE-C-3512787.In the system disclosed there the remitter-part is formed by an inner subsystem of the exchange. By this, detection of network component identifiers can only be executed within an exchange being provided with such integrated remitter-facility.

### B. SUMMARY OF THE INVENTION

The invention is based on the insight that nowadays, ali modern telecommunication networks are able to output 'calling number identifiers' to their ports and exploiting that facility makes it possible to use external, portable remitters by connecting them to such network ports. Moreover, it is no longer neccessary that such network explicitly offers a (built in) remitter facility, like the known system. Also, the remitter function is not restricted to the local (exchange controlled) network.

So, the present invention provides a portable remitter, being independent from the structure of any exchange, making it possible to detect network components in all kinds of modern exchanges, and, moreover, not restricted to a local network, but also applicable to interlocal networks. In the system according to the invention, said remitter comprises interface means for interacting with the telecommunications network and is connected, via said interface means, to a common port of that telecommunication network.

### C. EXEMPLARY EMBODIMENTS

The invention is illustrated in greater detail with reference to figures 1, 2 and 3. Fig. 1 shows a telecommunication system in which the system according to the invention can be used. Fig. 2 shows diagrammatically an exemplary embodiment of a remitter which is or may be a part of the system according to the invention. Fig. 3 shows diagrammatically an exemplary embodiment of a detector which is or may be a part of the system according to the invention.

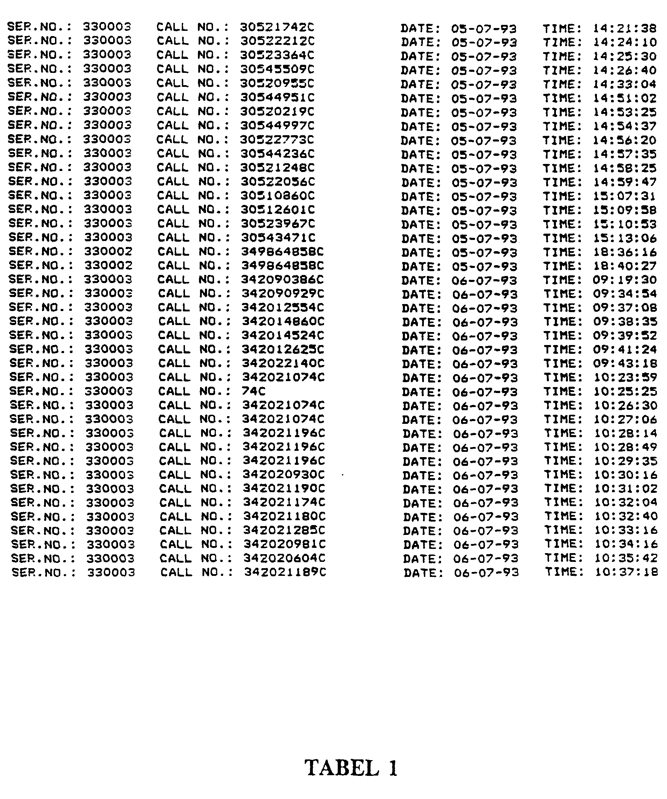

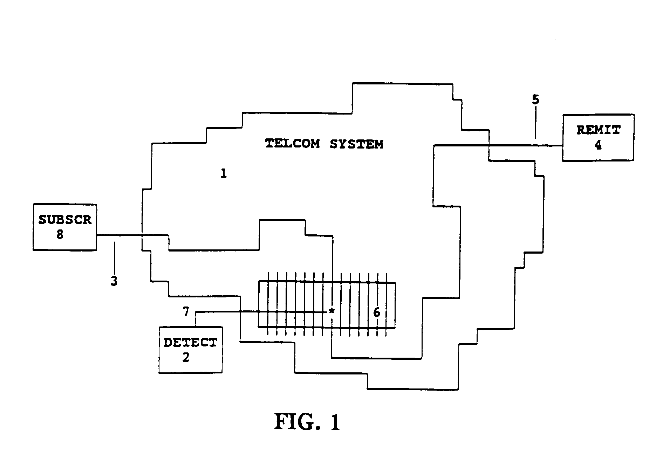

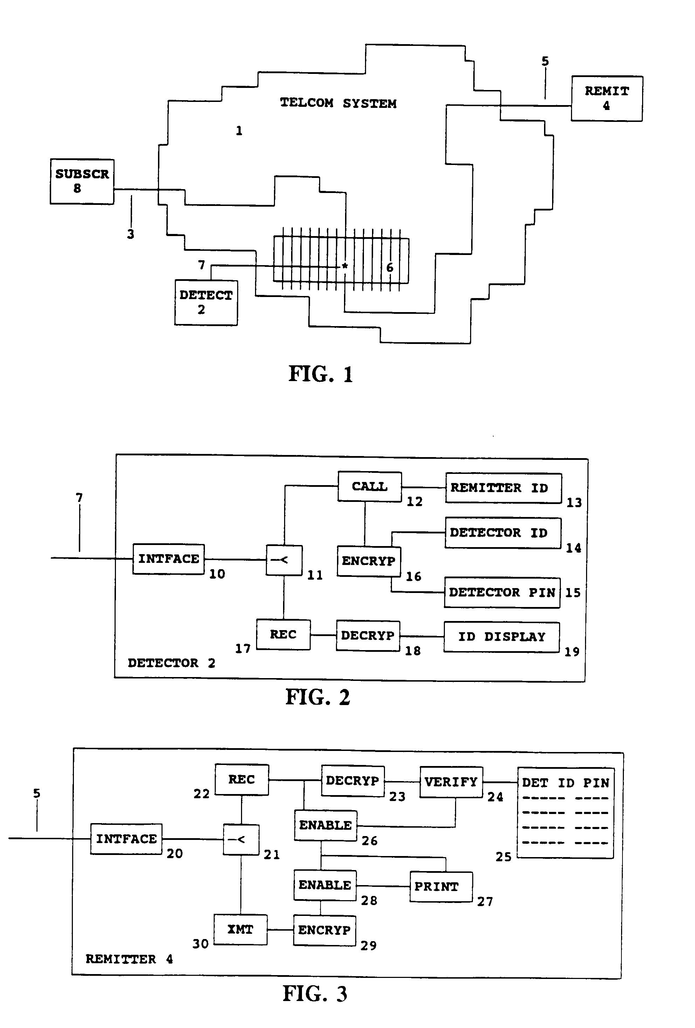

Fig. 1 shows a telecommunication system 1 which comprises, inter alia, transmission, switching and terminal components and which serves to make connections between said terminal components making use of a network of transmission and switching components. As terminal components Fig. 1 shows the network connections 3 and 5; all the network connections have a connection number as identifier. It is also possible that terminals (speech, display or data terminals), which are connected or can be connected to the network connections, have their own identifier, with which they can identify themselves with respect to the network or other terminals or subordinate systems. It is also possible for users of the terminals to be able to identify themselves with respect to the network or other users, terminals or systems; the latter is, for example, a development within UPT (universal personal telecommunications). Terminals may be connected to the network via copper cores, optical fibres or via radio channels, while the network itself may also use various media. Situated within the network of Fig. 1 are manipulation or test points 6, for example in the form of cable distribution boxes etc. Connections may also be tested and manipulated in cable junction boxes in which cable cores may be joined to one another or branched. It is important to know, at said points 6, for each core pair, to which network component, for example network connection, said core pair is connected. In order to be able to test this, a detector 2 is connected to such a pair. The latter is capable of making a call at said test point to a certain network connection ('telephone number'). The network connection must have been cleared by the telecommunication system for a facility which is referred to as 'calling number display'. According to the invention, a special terminal, namely a remitter 4, is connected to said network connection. The latter is capable of receiving the 'calling number identifier' transmitted by the network and sending it back to the terminal which initiated the call, or to the detector 2. The latter receives the identifier sent back and can show it on a display so that the operator at the manipulation/test point 6 sees what the identifier of the component is with which he had connected the detector 2. To prevent undesirable situations occurring, the detector 2 identifies itself with respect to the remitter 4 by also sending its own ID and PIN code. In addition, the data transmitted, the ID and PIN code sent by the detector 4 in the outward direction and the component identifier sent back by the remitter 4, are transmitted in encrypted form.

Fig. 2 shows diagrammatically an example of the implementation of the detector 2, while Fig. 3 shows diagrammatically an example of the implementation of the remitter 4.

Detector 2 comprises an interface 10 with the network (via a connection 7). A call can be emitted by a call generator 12 to the network connection 5 to which remitter 4 is connected via a fork circuit 11; the identifier (the subscriber number) of the network connection 5 is stored in a detector 2 in a register 13, as a result of which the operator can initiate the call without having to dial (he does not even have to know the number) the subscriber number under which the remitter 4 can be reached. After the connection has been made, a component 14 first sends out a detector identifier, followed by a detector PIN code from a component 15, both identifier and PIN code having first been encrypted in a component 16.

Remitter 4 (see Fig. 3) is also provided with a network interface 20 and a fork circuit 21. After detector 2 has obtained a connection to remitter 4, the identifier of the calling detector 2, that is to say the identifier of the line to which the detector 2 is connected via connection 7, is transmitted by the control system of the telecommunication system. If the manipulation/test point 6 is a local cable connection box, the 'component identifier' is therefore the identifier of the network connection 3, in other words, the 'subscriber number' of subscriber 8. Said identifier, which the telecommunication system offers to the called remitter on the basis of the 'calling number display', is not sent back immediately but only after the detector has first sent his detector identifier and PIN code, which are verified by a component 24 using a register 25. If that verification is positive, an enable component 26 is activated and the detector identifier, the requested component identifier (of the component 3 to which the detector 2 is connected) and date and time are sent to a printer 27. Only after the detector identifier and the identifier of connection 3 to be sent back have been received in the printing buffer of printer 27 (the printout serves for possible later verification or production of proof), is the requested component identifier (which is allowed through by an enable component 28 activated by the printer) sent back by a transmitter 30 after having been encrypted in a component 29.

Detector 2 thus receives the requested, a priori unknown component identifier which is fed to a display 19 via a receiver 17 after having been decrypted in a component 18.

Through the system according to the invention, relatively large savings and quality improvement can be achieved which are primarily the consequence of the very large number of lines and other components in a (public) telecommunication system having many subscribers, both business and private, and the large number of changes which are the consequence thereof. Appreciable time can also be gained in the elimination of malfunctions such as those which are the consequence of digging through telecommunication cables, for example during building operations etc.

To summarize, savings can be achieved by:
- only one operator instead of two necessary for testing;
- time gained in the event of malfunctions;
- direct and undistorted data exchange;
- recording of the data on a printer possible;
- fits into a system for guaranteeing quality;
- increases the performance of the telecommunication system;
- avoids unnecessary investment in cable/bundle/ channel capacity.

Finally a section of the output of the printer 27 is shown in the table. In the latter the 'SER. NO.' represents the detector identifier (with which the detector 2 thus identifies itself with respect to the remitter 4), and 'CALL NO.' represents the a priori unknown component identifier, in this case subscriber connection number. Furthermore, the date and time of the test are shown. An impression of the speed with which a large number of connections can be tested can be obtained from the consecutively recorded times. The test time is determined essentially by the speed with which the detector 2 is connected to consecutive subscriber connections via connection 7. However, it is possible, in principle, to accelerate the 'plug changing' if, at the manipulation/test point 6, all the connections are or have been connected to a type of 'scanner' which consecutively makes contact with the various connection points. Such a scanner can be driven by the detector 2, the scanner thus always 'stepping' one connection point on after the a priori unknown identifier has been received back via the remitter 4. In this connection, the display may optionally be replaced by or expanded with a small printer which shows the consecutive test results. However, the output of the printer will completely coincide with the output of the printer at the remitter so that the system according to the invention could be controlled completely from the remitter end, that is to say centrally, and the data relating to the actual occupation of the cables etc. could be collected centrally.

Finally, it is pointed out that it is also possible to test the continuity of subscriber lines, for example, with the aid of two detectors, one of which sends its ID code to the other, which ID code is detected by the other if both are connected to the same subscriber line. In this way, as a departure from the above, where one detector cooperates with a remitter, two detectors can be used, for example, to test the continuity of core pairs which are not connected either to a subscriber or to an exchange. The design of the detectors virtually needs no modification for this option.

### D. REFERENCES

DE-C-3512787

## Claims

1. System for detecting the identifier of a first component of a telecommunication network comprising a detector (2) which is connected to that first component and said detector being equipped to transmit the identifier of the first component to a remitter (4) being equipped to transmit to the detector the received identifier of the first component, characterized in that said remitter (4) comprises interface means (20) for interacting with the telecommunications network and is connected, via said interface means, to a common port (3) of that telecommunication network.

2. Remitter for detecting, in cooperation with a detector (2) in a telecommunication network, the identifier of a first component of said telecommunication network characterized by interface means (20) for interacting with the telecommunications network via a common port of that telecommunications network, and by means to receive (22) from said detector said identifier of the first component and by means to transmit (30) said received identifier to said detector .

3. Remitter according to Claim 2, characterized by a receiver (22) for receiving, via said port, an identifier, transmitted by the telecommunication network, of the first component and a transmitter (30) for transmitting the identifier of the first component to the detector (2).

4. Remitter according to Claim 2, characterized by means for carrying out a verification protocol with the detector.

5. Remitter according to Claim 4, characterized by means (24, 25) for verifying one or more received identifiers of the detector with identifiers recorded in the remitter and only sending back the identifier of the first component if the received identifiers and the recorded identifiers correspond.

6. Remitter according to Claim 2, characterized by means (29) for encrypting the identifier of the first component to be sent back.

7. Detector for detecting, in cooperation with a remitter according to Claim 2 in a telecommunication network, the identifier of a first component cf said telecommunication network such as a terminal component, transmission component or switching component, which detector is connected directly or via the telecommunication network to said first component, characterized by a calling component (12) for making a call to the remitter, and a component (19) for displaying the identifier, sent back by the remitter, of the first component.

8. Detector according to Claim 7, characterized by means for carrying out a verification protocol with the remitter.

9. Detector according to Claim 7, characterized by means (18) for decrypting the received identifier of the first component.

## Patentansprüche

1. Detektionssystem für den Identifizierer eines ersten Bauteils eines Telekommunikationsnetzwerkes, mit einem Detektor (2), welcher an das erste Bauteil angeschlossen ist und, welche ausgerüstet ist, um den Identifizierer des ersten Bauteiles an einen Zwischensender (4) zu übertragen, welcher ausgerüstet ist, um dem Detektor den empfangenen Identifizierer des ersten Bauteiles zu übertragen, dadurch gekennzeichnet, dass der Zwischensender (4) eine Schnittstelleneinrichtung (20) hat, um mit dem Telekommunikationsnetzwerk in Wechselwirkung zu treten und der Zwischensender über die Schnittstelleneinrichtung an einen gemeinsamen Anschluss des Telekommunikationsnetzwerkes angeschlossen ist.

2. Zwischensender zum Auswerten, in Verbindung mit einem Detektor in einem Telekommunikationsnetzwerk, des Identifizierers eines ersten Bauteiles des Telekommunikationsnetzwerkes, gekennzeichnet durch eine Schnittstelleneinrichtung (2a), um mit dem Kommunikationsnetzwerk über einen gemeinsamen Anschluß des Kommunikationsnetzwerkes in Wechselwirkung zu treten und durch Mittel zum Empfangen (22) des Identifizierers des ersten Bauteiles vom Detektor, und durch Mittel (30) zum Übertragen des empfangenen Identifizierers an den Detektor.

3. Zwischensender nach Anspruch 2, gekennzeichnet durch einen Empfänger (22) zum Empfangen eines Identifizierers des ersten Bauteiles, der von dem Telekommunikationsnetzwerk übertragen wird und einen Sender (30) zum Übertragen des Identifizierers des ersten Bauteiles an den Detektor (2).

4. Zwischensender nach Anspruch 2, gekennzeichnet durch Mittel zum Durchführen eines Prüfprotokolls mit dem Detektor.

5. Zwischensender nach Anspruch 4, gekennzeichnet durch Mittel (24,25) zum Prüfen von einem oder mehreren empfangenen Identifizierern des Detektors mit im Zwischensender gespeicherten Identifizierern, um nur den Identifizierer des ersten Bauteiles zurück zu übertragen, wenn die empfangenen Identifizierer und die gespeicherten Identifizierer einander entsprechen.

6. Zwischensender nach Anspruch 2, gekennzeichnet durch Mittel (29) zum Verschlüsseln des zurückzusendenden Identifizierers des ersten Bauteiles.

7. Detektor zum Detektieren, in Verbindung mit einem Zwischensender nach Anspruch 2, in einem Telekommunikationsnetzwerk, des Identifierers eines ersten Bauteiles des Telekommunikationsnetzwerkes, wie etwa ein Endgerätteil, Übertragungsteil oder Schaltteil, wobei der Detektor direkt oder über ein Telekommunikationsnetzwerk an das erste Bauteil angeschlossen ist, gekennzeichnet durch ein Rufelement (12), um einen Ruf zum Zwischensender durchzuführen und einem Element (19) zum Darstellen des vom Zwischensender zurück geschickten Identifizierers des ersten Bauteiles.

8. Detektor nach Anspruch 7, gekennzeichnet durch Mittel zur Durchführung eines Prüfprotokolls mit dem Zwischensender.

9. Detektor nach Anspruch 7, gekennzeichnet durch Mittel (18) zum Verschlüsseln des empfangenen Identifizierers des ersten Bauteiles.

## Revendications

1. Système de détection d'un identificateur d'un premier composant d'un réseau de télécommunications, comprenant un détecteur (2), qui est connecté audit premier composant et qui est équipé pour transmettre l'identificateur du premier composant à un réémetteur (4), qui lui est équipé pour transmettre au détecteur l'identificateur du premier composant reçu, caractérisé en ce que ledit réémetteur (4) comprend un moyen d'interface (20) pour dialoguer avec le réseau de télécommunications et qui est connecté par l'intermédiaire du moyen d'interface à un accès commun (3) du réseau de télécommunications.

2. Rééemetteur pour détecter en coopération avec un détecteur (2) dans un réseau de télécommunications d'identificateur d'un premier composant du réseau de télécommunications, caractérisé par un moyen d'interface (2a) pour dialoguer avec le réseau de télécommunications par un accès commun dudit réseau de télécommunications, et par un moyen pour recevoir (22) du détecteur ledit identificateur du premier composant et par un moyen pour transmettre (30) ledit identificateur reçu au détecteur.

3. Réémetteur selon la revendication 2, caractérisé par un récepteur (22) pour recevoir par l'intermédiaire dudit accès un identificateur du premier composant transmis par le réseau de télécommunications et un émetteur (30) pour émettre l'identificateur du premier composant vers le détecteur (2).

4. Réémetteur selon la revendication 2, caractérisé par un moyen pour réaliser un protocole de vérification avec le détecteur.

5. Réémetteur selon la revendication 4, caractérisé par un moyen (24,25) pour vérifier un ou plusieurs identificateurs de détecteur reçus avec des identificateurs enregistrés dans le réémetteur et de renvoyer seulement l'identificateur du premier composant, si les identificateurs reçus et les identificateurs enregistrés correspondent.

6. Réémetteur selon la revendication 2, caractérisé par un moyen (29) pour chiffrer l'identificateur du premier composant à renvoyer.

7. Détecteur pour détecter en coopération avec un réémetteur selon la revendication 2 dans un réseau de télécommunication l'identificateur, d'un premier composant du réseau de télécommunications, tel qu'un composant du type terminal, émetteur ou commutateur, ledit détecteur étant connecté directement ou par l'intermédiaire du réseau de télécommunications audit premier composant, caractérisé par un composant d'appel (12) pour faire un appel au réémetteur et un composant (19) pour afficher l'identificateur du premier composant renvoyé par le réémetteur.

8. Détecteur selon la revendication 7, caractérisé par un moyen pour réaliser un protocole de vérification avec le réémetteur.

9. Détecteur selon la revendication 7, caractérisé par un moyen (18) pour déchiffrer l'identificateur du premier composant reçu.
